# EUROPEAN PATENT SPECIFICATION

(11) **EP 2 083 285 B1**
(45) Date of publication and mention of the grant of the patent: **16.08.2017**
(21) Application number: 07832035.5
(22) Date of filing: 16.11.2007
(51) Int. Cl.: G01T 1/18, H01J 47/06

(54) **PROPORTIONAL COUNTER**
PROPORTIONALER ZÄHLER
COMPTEUR PROPORTIONNEL

(30) Priority: 17.11.2006 JP 2006311732
(43) Date of publication of application: 29.07.2009
(73) Proprietor: Toshiba Electron Tubes & Devices Co., Ltd., Otawara-shi, Tochigi-ken (JP)
(72) Inventor: HIKIDA, Noriyuki, Tokyo, 105-8001 (JP); ISHIZAWA, Kazuya, Tokyo, 105-8001 (JP); SEKI, Eiji, Tokyo, 105-8001 (JP)
(74) Representative: Henkel, Breuer & Partner
(86) International application number: PCT/JP2007/072305
(87) International publication number: WO 2008/059966

(56) References cited:
- GB-A- 2 134 703
- JP-A- 05 054 850
- JP-A- 54 139 780
- JP-A- 59 146 388
- JP-U- 02 039 187
- US-A- 3 092 747

## Description

### Technical Field

The present invention relates to a proportional counter tube for use in discriminating the energy of radiation.

### Background Art

Most proportional counter tubes for use in analyzing X-rays have a tubular envelope and an anode. The envelope serves as a cathode. The anode is arranged in the envelope and is axially aligned with the envelope. The envelope is filled with gas. The gas can absorb X-rays and can ionize. The envelope has an X-ray window, through which X-rays may be applied to the envelope.

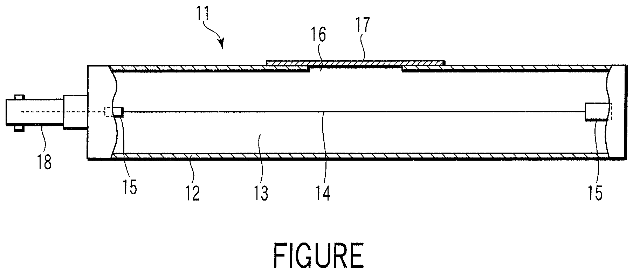

When X-rays enter the envelope through the X-ray application window, they react with the gas filling the envelope. In the envelope, the gas ionizes, generating electron-ion pairs. The number of electron-ion pairs generated corresponds to the energy of the X-rays applied to the envelope. The electrons generated in the envelope are attracted to the anode, by virtue of the potential difference between the anode and the cathode. The electrons constitute a current. The current is amplified by the intense electric field existing near the anode. The current thus amplified is output as an electrical pulse signal from the proportional counter tube. The amplitude of the electrical pulse signal depends on the energy of the X-rays. The energy of the X-rays applied to the proportional counter tube can therefore be determined from the amplitude of the electrical pulse signal. (See, for example, JPH0528958, FIGS. 1 and 2, page 2.)

In most cases, the gas filled in the proportional counter tube is a gas composition that comprises a rare gas and a trace of a supplementary gas. The supplementary gas is usually a hydrocarbon such as methane (CH₄) or propane (C₂H₈), or a molecular gas such as carbon dioxide (CO₂). (See, for example, Glenn F. Knoll, Handbook of Radiation Measuring, 3rd ed., Nikkan Kogyo Shimbun, p. 196.) The supplementary gas is used for the purpose of absorbing ultraviolet light generated when the rare-gas ions undergo recombination, thereby to stabilize the operation of the proportional counter tube. In most cases, the supplementary gas is a molecular gas that exhibits high ability of absorbing ultraviolet light. If the proportional counter tube is installed in a high-radiation field, the supplementary gas may be hydrocarbon. In this case, the radiation polymerizes the supplementary gas, forming a high-molecular layer on the anode or the cathode, or both.

The high-molecular layer is electrically insulating and may hinder the normal operation of the proportional counter tube. This is why carbon dioxide is used as a supplementary gas in most proportional counter tubes that are commercially available.

US 3 092 747 A relates to gas-type proportional counters capable of infinite lifetime.

GB 2 134 703 A concerns a way in which to prolong the service life of gas-filled proportional counters, a gas containing hydrogen is being used as gas mixture in the counters.

### Disclosure of Invention

As generally known in the art, the resolution of an energy spectrum will decrease and the gas-amplification factor will decrease, adversely influencing the operation of the proportional counter tube, if gas such as oxygen, water vapor, or a halogen compound, which attracts electrons and generates anions, enters the proportional counter tube. Carbon dioxide also has the ability of attracting electrons, though the ability is not as high as that of oxygen. If used as a supplementary gas, carbon dioxide will reduce the resolution of the energy spectrum.

The gas-amplification factor of any proportional counter tube is susceptible to the partial pressure of gas or the composition of gas. Depending on the measuring conditions, the gas may be adsorbed or released to the internal component of the tube. Therefore, the gas gain may gradually decrease, in some cases, if the proportional counter tube has been left unused for, for example, a few weeks and is then used. That is, the gas adsorbed to the internal component during the non-use period is released, in part, due to X-rays from the internal component when the counter tube is used again. The gas gain keeps decreasing until the incoming gas and the outgoing gas are balanced in terms of flow rate. The decrease in the gas gain is usually 1% or less. The gas-gain decrease will saturate if the proportional counter tube is used continuously. However, the gas-gain decrease may raise a problem if the proportional counter tube is used in a high-precision measuring device.

The present invention has been made in view of the foregoing. An object of the invention is to provide a proportional counter tube which is free of the polymerization of a supplementary gas, induced by radiation, which achieves higher resolution of the energy spectrum than any proportional counter tube that use carbon dioxide as a supplementary gas, and in which the gas gain changes but a little.

To solve the above-mentioned problem and to attain the above-mentioned object, a proportional counter tube according to the present invention is configured as will be described below.

Accordingly, there is provided a proportional counter tube as set out in independent claim 1.

### Brief Description of Drawings

The single figure is a sectional view of a proportional counter tube according to an embodiment of the present invention.

### Best Mode for Carrying Out the Invention

An embodiment of the present invention will be described with reference to figure.

As shown in figure, a proportional counter tube 11 according to the embodiment comprises an envelope 12 is a sealed tubular member made of SUS (stainless steel) as used as cathode.

The envelope 12 is filled with gas 13, which is X-ray absorbing gas. The gas 13 is composed of rare gas that can ionize, such as Ne, Ar, Kr or Xe, and a few percent of molecular gas. The molecular gas contains 0.1% or more of nitrogen and 0.01% or more of hydrogen in terms of pressure ratio.

In the envelope 12, an anode 14 is arranged in axial alignment. The anode 14 is held at both ends to the envelope 12, by insulators 15. The anode 14 has a relatively small diameter so that the electric field near it may be intensified to impart a large gas-amplification factor to the proportional counter tube 11.

The envelope 12 has an X-ray application port 16, i.e., radiation application port, in the circumferential wall. The X-ray application port 16 is closed with an X-ray application window 17. The X-ray application window 17 is made of, for example, beryllium (Be) that excels in X-ray transmittance.

A connector 18 is secured to one end of the envelope 12 that is the cathode. The connector 18 is secured to the cathode 14, too.

How the proportional counter tube 11 operates will be explained.

X-rays are applied to the envelope 12 through the X-ray application window 17. In the envelope 12, the X-rays react with the gas 13. The gas 13 ionizes and generates electron-ion pairs. The number of the electron-ion pairs generated corresponds to the energy of the X-rays applied to the envelope 12. The electrons are attracted to the anode 14 by the potential difference applied between the anode 14 and the envelope 12, i.e., cathode. The intense electric field existing near the anode 14 amplifies the current consisting of the electrons. The current thus amplified is output, as an electrical pulse signal, from the proportional counter tube 11. The amplitude of the electrical pulse signal depends on the energy of the X-rays applied to the envelope 12. Therefore, the energy of the X-rays applied can be determined from the amplitude of the electrical pulse signal.

How to improve the resolution of the proportional counter tube 11 will be explained.

Unlike hydrocarbon, carbon dioxide undergoes no polymerization because it is a stable gas. In addition, carbon dioxide is an inexpensive gas. This is why carbon dioxide is generally used as a supplementary gas in proportional counter tubes. Carbon dioxide impairs the resolution, however. In view of this, nitrogen may be used as a supplementary gas in proportional counter tubes in order to improve the resolution.

Nitrogen is a chemically inert or stable gas, too. In addition, nitrogen molecules do not attract electrons. Although nitrogen molecules do not have so large an ultraviolet-absorbing cross section as carbon dioxide molecules, the absorption of ultraviolet light can be adjusted in the proportional counter tube by using nitrogen in a greater amount.

An experiment was conducted, in which nitrogen was used as a supplementary gas in place of carbon dioxide. The results show that the resolution of the energy spectrum of the X-rays (11.1 keV) generated by radioactive isotope Cd-109 is about 6% higher than in the case where carbon dioxide is used as a supplementary gas.

Hydrocarbon, such as carbon dioxide or methane, is used as a supplementary gas, usually in an amount ranging from 0.1% to 100% in terms of total pressure, though the amount depends on the condition and object in and for which the proportional counter tube is operated. If used in an amount less than the lower limit, carbon dioxide will fail to absorb ultraviolet light sufficiently. In this case, the proportional counter tube 11 may not operate stably. If nitrogen is used as a supplementary gas, the amount used should fall within this range. If used in an amount less than the lower than 0.1% in terms of total pressure, the proportional counter tube 11 may not operate stably. Since nitrogen is chemically stable, it may be used as gas that absorbs X-rays to ionize. In this case, nitrogen may be used in an amount of 100%.

It will be explained how the spectrum peak may be prevented from lowering in the proportional counter tube 11.

As described above, if the proportional counter tube 11 is used after a long non-use period, the gas gain decreases for some time, though by only 1% or less. This gas-gain decrease may result from the gas leakage into and from the internal component of the tube 11. Hence, to prevent the gas-gain decrease, gas that hardly leaks into and from the component may be used or the component may be so constructed to prevent the gas from leading into and from it. In addition to this basic measure taken, the gas may contain a gas that would not influence the operating characteristic of the tube 11 even if it leaks into and from the internal component.

Hydrogen is desirable as such a gas. Since hydrogen absorbs ultraviolet light but a little and does not attract electrons, it scarcely influences the gas gain of the proportional counter tube 11 even if its partial pressure changes. Thus, the change of gas gain will be suppressed if hydrogen is mixed with the gas and at least a part of the gas leaking into and from the internal component is therefore hydrogen.

The amount in which to mix hydrogen with the gas is preferably 0.01% or more in terms of total pressure, because the experiment shows that the shift of the spectrum peak is controlled when the ratio of hydrogen mixed to the nitrogen used is about 0.1. If used in an amount less than 0.01% in terms of total pressure, hydrogen cannot sufficiently suppress the change of gas gain.

Hydrogen molecules have an ultraviolet-absorbing cross section much smaller than that of any other gases. If mixed to nitrogen for the purpose of absorbing ultraviolet light, hydrogen must be put under a higher pressure than any other gases. In view of this, hydrogen is undesirable.

Hydrogen absorbs X-rays far less than any other substances. If hydrogen occupies a large part of the gas filled in the envelope 12, the X-ray sensitivity of the proportional counter tube 11 will decrease greatly. It is therefore undesirable to use hydrogen as gas that ionizes upon absorbing X-rays. Hence, hydrogen should better be mixed with the gas in such an amount as will suppress the gas-gain change, whereas rare gas or nitrogen absorbs X-rays and ionize and nitrogen absorbs ultraviolet light. More precisely, it is desired that hydrogen be used in an amount of about 10% at most so that it may not much lower the X-ray sensitivity of the proportional counter tube 11.

As described above, the gas 13 filled in the envelope 12 comprises nitrogen and hydrogen. The proportional counter tube 11 is therefore free of the polymerization of the supplementary gas, induced by radiation. Hence, the proportional counter tube 11 can achieve a higher energy-spectrum resolution than any proportional counter tube that uses carbon dioxide as a supplementary gas. Further, the gas gain changes but a little in the proportional counter tube 11. The proportional counter tube 11 can therefore help to provide a spectrum-measuring system that operates stably and reliably.

### Industrial Applicability

The present invention can provide a which is a proportional counter tube which is free of the polymerization of a supplementary gas, induced by radiation, which achieves higher resolution of an energy spectrum than any proportional counter tube that uses carbon dioxide as a supplementary gas, and in which the gas gain changes but a little.

## Claims

1. A proportional counter tube (11) comprising:
an envelope (12) which is shaped like a tube and which serves as a cathode;
an anode (14) which is provided in the envelope (12) and is arranged in axial alignment with the envelope (12);
gas which is filled in the envelope (12) and is capable of absorbing radiation and ionizing, the gas being composed of rare gas and a few percent of molecular gas, the rare gas including at least one of Ne, Ar, Kr and Xe;
a radiation application window (17) which is made in the envelope (12) and allows radiation to enter the envelope (12), **characterized in that** the gas contains 0.1% or more of nitrogen and 0.01% or more of hydrogen in terms of total pressure as the molecular gas.

## Patentansprüche

1. Proportionalzählerrohr (11), aufweisend:
eine Ummantelung (12) welche rohrförmig ausgebildet ist, und welche als eine Kathode dient;
eine Anode (14), welche in der Ummantelung (12) vorgesehen ist, und welche in axialer Ausrichtung mit der Ummantelung (12) angeordnet ist;
Gas, welches in der Ummantelung (12) eingefüllt ist, und welches in der Lage ist, eine Strahlung und eine Ionisierung zu absorbieren, wobei das Gas aus Edelgas und einigen Prozent Molekulargas besteht, und wobei das Edelgas zumindest eines von Ne, Ar, Kr und Xe umfasst;
ein Strahlungsanwendungsfenster (17), welches in der Ummantelung (12) ausgebildet ist, und welches zulässt, dass eine Strahlung in die Ummantelung (12) eintritt,
**dadurch gekennzeichnet, dass**
das Gas 0,1% oder mehr von Stickstoff und 0,01% oder mehr von Wasserstoff hinsichtlich des Gesamtdrucks als das Molekulargas enthält.

## Revendications

1. Tube de compteur proportionnel (11) comprenant :
une enveloppe (12) qui est façonnée comme un tube et qui sert comme une cathode ;
une anode (14) qui est fournie dans l'enveloppe (12) et est disposée dans un alignement axial avec l'enveloppe (12) ;
du gaz qui est introduit dans l'enveloppe (12) et est capable d'absorber un rayonnement et d'ioniser, le gaz étant constitué de gaz rare et de quelques pourcents de gaz moléculaire, le gaz rare comprenant au moins un de Ne, Ar, Kr et Xe ;
une fenêtre d'application de rayonnement (17) qui est constituée dans l'enveloppe (12) et permet à un rayonnement d'entrer dans l'enveloppe (12),
**caractérisé en ce que**
le gaz contient 0,1 % ou plus d'azote et 0,01 % ou plus d'hydrogène en termes de pression totale comme le gaz moléculaire.
